# FASCICULE DE BREVET EUROPEEN

(11) **EP 2 082 216 B1**
(45) Date de publication et mention de la délivrance du brevet: **22.02.2012**
(21) Numéro de dépôt: 07858657.5
(22) Date de dépôt: 24.10.2007
(51) Int. Cl.: G01N 21/90

(54) **PROCEDE ET DISPOSITIF POUR DETECTER DES DEFAUTS A FAIBLE ET FORT CONTRASTES DANS DES OBJETS TRANSPARENTS OU TRANSLUCIDES**
VERFAHREN UND VORRICHTUNG ZUM NACHWEIS VON NIEDRIGKONTRAST- UND HOCHKONTRASTDEFEKTEN BEI DURCHSICHTIGEN ODER DUCHSCHEINENDEN OBJEKTEN
METHOD AND DEVICE FOR DETECTING LOW-CONTRAST AND HIGH-CONTRAST DEFECTS IN TRANSPARENT OR TRANSLUCENT OBJECTS

(30) Priorité: 24.10.2006 FR 0654489
(43) Date de publication de la demande: 29.07.2009
(73) Titulaire: Tiama, 69700 Montagny (FR)
(72) Inventeur: LECONTE, Marc, 69700 Loire Sur Rhone (FR)
(74) Mandataire: Thibault, Jean-Marc
(86) Numéro de dépôt international: PCT/FR2007/052238
(87) Numéro de publication internationale: WO 2008/050066

(56) Documents cités:
- EP-A- 1 494 012
- EP-A- 1 498 725
- EP-A2- 0 337 421
- DE-C1- 19 534 724
- GB-A- 2 334 576
- GB-A- 2 350 423
- JP-A- 11 108 844
- JP-A- 2005 291 830

## Description

La présente invention concerne le domaine technique du contrôle optique d'objets translucides ou transparents en vue de détecter d'éventuels défauts de ces objets.

L'objet de l'invention trouve une application particulièrement avantageuse pour la détection de défauts absorbant et/ou réfractant la lumière, susceptibles d'apparaître sur des objets tels que des récipients en verre ou en matière plastique.

Il est connu d'inspecter de manière automatique et en ligne, des objets défilant à haute cadence devant un poste de contrôle optique comportant une source de lumière située d'un côté de l'objet et une caméra située de l'autre côté. La caméra réalise une image grâce à la lumière traversant les objets. Ce principe d'éclairage est dit par transmission.

Dans ces conditions d'observation avec une source de lumière uniforme et étendue par rapport à l'objet inspecté, les défauts de ces objets se comportent différemment selon leur nature et leur forme et peuvent être classés en deux catégories. Certains de ces défauts tels que des inclusions de matière non transparente absorbent la lumière et plus rarement des plis ou accidents de surface fortement marqués réfractent fortement la lumière. Dans ces conditions d'observation, ces défauts présentent un fort contraste dans l'image et sont considérés comme des défauts à fort contraste. D'autres défauts réfractants moins marqués tels que des bulles d'air, des plis en surface ou des variations locales d'épaisseur du matériau transparent provoquent dans ces conditions d'observation, un contraste insuffisant dans l'image pour pouvoir être détecté. De même, des défauts tels que des salissures diffusant la lumière ne permettent pas leur détection dans ces conditions d'observation. Ces défauts réfractants et diffusants sont dits à faible contraste.

Pour tenter de détecter les défauts de faible contraste, il est connu par exemple par les brevets EP 1 498 725, US 5 004 909 ou EP 0 344 617 d'utiliser comme source d'éclairage, une mire constituée par des bandes alternées noires et blanches. La mire observée à travers l'objet est déformée localement en présence de défauts faible contraste. Le traitement d'images détecte ainsi les transitions au niveau des transitions des bandes noires et blanches. L'inconvénient majeur d'une telle technique réside dans l'impossibilité de détecter correctement les défauts à fort contraste qui peuvent être situés dans les parties des bandes noires de l'image correspondant aux bandes noires de la mire. Aussi, pour assurer la détection à coup sûr des défauts à fort contraste et des défauts à faible contraste, il apparaît nécessaire de faire défiler successivement les objets devant deux postes différents de contrôle optique, ce qui entraîne un coût d'inspection relativement élevé et engendre un encombrement sur la ligne de fabrication.

Pour tenter de remédier à cet inconvénient, le brevet FR 2 794 242 a proposé de créer au niveau de la source d'éclairage, des variations de lumière suffisamment lentes pour ne pas être détectées comme des défauts, mais ayant un effet d'augmentation de contraste pour les défauts faible contraste. Cette solution présente l'avantage d'utiliser une seule source de lumière pour détecter deux types de défauts. Cependant, il apparaît que les variations de lumière entre différentes régions de la source d'éclairage ne sont pas perceptibles sous forme de lignes de mire déformées, ce qui ne permet pas de détecter les défauts réfractants très faiblement contrastés.

Par ailleurs, le document EP 1 494 012 décrit une machine d inspection comportant plusieurs types de sources d'éclairage adaptées pour détecter chacune un type spécifique de défauts. La machine comporte une interface homme-machine permettant de sélectionner la source d'éclairage en fonction du type de défaut à déceler. Une telle machine ne permet pas de détecter en ligne des défauts qui requièrent plusieurs types de défauts, sur des objets défilant à haute cadence.

L'objet de l'invention vise donc à remédier aux inconvénients de l'état de la technique en proposant une nouvelle technique permettant de détecter correctement et à faible coût les défauts faible contraste et les défauts fort contraste susceptibles d'apparaître dans des objets transparents ou translucides défilant à haute cadence.

L'objet de l'invention concerne un procédé optique d'inspection en ligne d'objets transparents ou translucides défilant à haute cadence entre une source lumineuse et des moyens de prise d'images des objets et d'analyse des images prises, afin de détecter des défauts dans les objets.

Selon l'invention le procédé comprend les étapes définies dans la revendication 1.

Selon une variante préférée de réalisation, le procédé consiste à piloter la source lumineuse de manière que le deuxième type d'éclairage est formé de zones sombres et de zones claires alternées avec une variation spatiale discontinue s'établissant selon un cycle périodique de valeur constante ou non.

Avantageusement, le procédé consiste à piloter la source lumineuse de manière que les longueurs des phases de transition tendent vers une longueur nulle.

De préférence, le procédé consiste à piloter la source lumineuse de manière que le niveau haut d'intensité lumineuse soit au moins supérieur au niveau bas d'intensité lumineuse, avec le niveau haut d'intensité lumineuse étant au moins suffisant pour traverser les objets tandis que le niveau bas d'intensité lumineuse tend vers une valeur nulle.

Selon un autre exemple de réalisation, le procédé consiste à piloter la source lumineuse de manière que les niveaux hauts (respectivement les niveaux bas) de l'intensité lumineuse des zones claires (respectivement des zones sombres) présentent des valeurs distinctes pour différents cycles.

Un autre objet de l'invention est de proposer un dispositif d'inspection optique en ligne d'objets transparents ou translucides défilant à haute cadence entre une source lumineuse et des moyens de prise d'images des objets et d'analyse des images prises afin de détecter des défauts dans les objets.

Selon l'invention, le dispositif comprend les caractéristiques définies dans la revendication 6.

Selon une première variante de réalisation, la source lumineuse est réalisée par une série de sources élémentaires réunies en zones accolées indépendamment, commandées en intensité et/ou en durée d'éclairement, un guide de lumière étant disposé devant chaque zone de manière à obtenir en sortie de chaque guide, une lumière homogène en intensité.

Par exemple, chaque guide de lumière est réalisé par un parallélépipède de matière transparente.

Selon un autre exemple, chaque guide de lumière est réalisé par un canal délimité par des parois dont au moins certaines d'entre elles séparent les guides de lumière entre eux.

De préférence, au moins un diffuseur est interposé sur le trajet de la lumière émise par les sources élémentaires.

Selon une autre variante de réalisation, la source lumineuse est réalisée par une source de lumière uniforme devant laquelle est placé un écran à cristaux liquides piloté pour rendre opaque ou transparente des zones déterminées.

Selon une autre variante de réalisation, la source lumineuse est réalisée par un système de projection sur un écran de reprise, d'images correspondant soit à une image homogène claire soit à une image comportant des zones sombres et des zones claires alternées avec une variation spatiale discontinue.

Selon une autre variante de réalisation, la source lumineuse est réalisée par une série de diodes électroluminescentes organiques réunies en zones accolées, indépendamment commandées en intensité et/ou en durée d'éclairement.

Selon une caractéristique avantageuse, un écran commandé électriquement pour occuper soit un état transparent soit un état diffusant, est disposé sur le trajet de la lumière de la source lumineuse.

Selon une autre variante de réalisation, la source de lumière est composée de sources élémentaires réunies en zones indépendamment commandées en intensité et/ou en durée d'éclairement, un écran commandé électriquement pour occuper soit un état transparent soit un état diffusant étant disposé sur le trajet de la lumière.

Avantageusement, le dispositif comporte un filtre polariseur linéaire ou circulaire devant la source d'éclairage et un filtre linéaire ou circulaire devant les moyens de prise d images

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'un dispositif d'inspection optique en ligne conforme à l'invention.
Les **Figures 2A** et **2B** illustrent respectivement un premier et un deuxième type d'éclairage d'une source d'éclairage conforme à l'invention.
Les **Figures 2C** et **2D** illustrent deux exemples de réalisation d'un premier type d'éclairage.
La **Figure 3** illustre le cycle de la variation du niveau **1** de lumière d'un deuxième type d'éclairage de la source conforme à l'invention selon une direction spatiale **h.**
Les **Figures 4** et **5** illustrent un exemple de réalisation d'une source d'éclairage conforme à l'invention produisant deux types d'éclairage distincts.
La **Figure 6** illustre un autre exemple de réalisation d'une source d'éclairage conforme à l'invention produisant deux types d'éclairage distincts.
La **Figure 7** est une vue en coupe-élévation montrant un détail caractéristique de la source d'éclairage illustrée à la **Fig. 6****.**

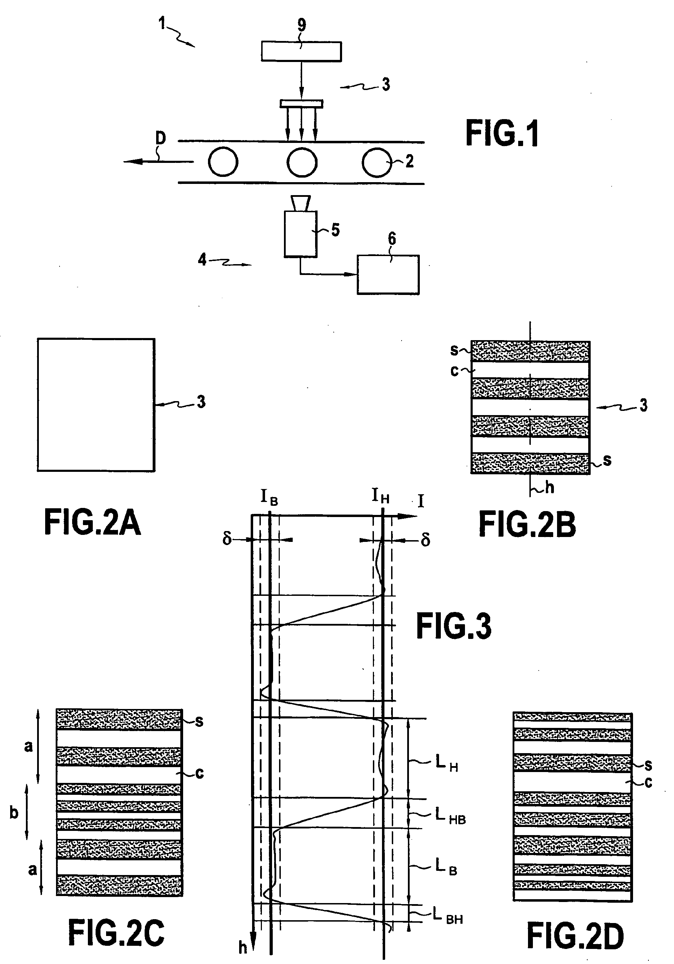

Tel que cela ressort plus précisément de la **Fig. 1****,** l'objet de l'invention concerne un dispositif d'inspection optique **1** permettant de contrôler en ligne des objets **2** défilant à haute cadence selon une direction de convoyage **D.** Par exemple, ces objets transparents ou translucides **2** sont des récipients du type bouteille, flacon ou pot en verre ou en matière plastique. Le dispositif d'inspection optique **1** est apte à détecter des défauts apparaissant dans les parois des objets **2.** Le poste optique **1** comporte une source lumineuse **3** et des moyens **4** de prise et d'analyse d'images des objets défilant entre la source lumineuse **3** et les moyens **4.** De manière classique, les moyens **4** sont réalisés par l'intermédiaire d'une caméra **5** reliée à une unité **6** de traitement des images afin de détecter des défauts présentés par les objets **2.** La caméra **5** peut être une caméra matricielle ou une caméra linéaire.

Le dispositif d'inspection optique **1** comporte des moyens **9** pour piloter la source lumineuse **3** de manière que ladite source lumineuse puisse produire successivement, à haute cadence, deux types d'éclairage tels qu'illustré aux **Fig. 2A** et **2B****.** La source lumineuse **3** est ainsi pilotée pour produire un premier type d'éclairage illustré à la **Fig. 2A** correspondant à un éclairage homogène et uniforme permettant d'éclairer au moins toutes les parties de l'objet à inspecter. Par ailleurs, les moyens **9** pilotent la source lumineuse **3** de manière à produire un deuxième type d'éclairage illustré plus particulièrement à la **Fig. 2B** et formé d'une alternance de zones sombres **s** et de zones claires **c** avec une variation spatiale discontinue. Les zones sombres **s** et les zones claires **c** sont alternées selon un pas ou un cycle qui est périodique ou non périodique comme cela sera expliqué dans la suite de la description.

Dans l'exemple illustré à la **Fig. 2B****,** les zones sombres **s** et les zones claires **c** sont des bandes horizontales alternées noires et blanches s'établissant selon un cycle périodique. Il est clair qu'il peut être envisagé de réaliser une alternance de zones sombres **s** et claires **c,** différentes de bandes horizontales. Par exemple, il peut être envisagé de réaliser des zones sombres et claires s'étendant verticalement, en oblique ou se présentant sous la forme de motifs adaptés aux objets à inspecter. Il pourrait être ainsi envisagé de réaliser des zones noires **s** et blanches **c** sous la forme d'un damier ou d'un réseau de zones noires et blanches juxtaposées.

La **Fig. 3** permet d'expliciter le deuxième type d'éclairage fourni par la source lumineuse **3.** Le cycle de variation spatiale du niveau **I** de la lumière dans le sens transversal **h** aux bandes alternées sombres **s** et claires **c** comporte quatre phases successives suivantes :
- une phase **P_{H}** de maintien sur une longueur **L_{H}** d'un niveau haut d'intensité lumineuse **I_{H}** à une valeur sensiblement constante,
- une phase **P_{B}** de maintien sur une longueur **L_{B}** d'un niveau bas d'intensité lumineuse **I_{B}** à une valeur sensiblement constante,
- une phase **P_{HB}** de transition de l'intensité haute **I_{H}** vers l'intensité basse **I_{B}** de longueur **L_{HB},**
- une phase **P_{BH}** de transition de l'intensité basse **I_{B}** vers l'intensité haute **I_{H}** de longueur **L_{BH}.**

Il doit être noté que les longueurs **L_{HB}** et **L_{BH}** des phases de transition sont très petites devant les longueurs **L_{B}** et **L_{H}** des phases de maintien aux intensités basse et haute. En d'autres termes, les phases de transition sont raides et de fortes pentes de sorte que les longueurs **L_{HB}** et **L_{BH}** tendent vers une valeur nulle. Dans la mesure où les longueurs **L_{HB}** et **L_{BH}** tendent vers une longueur nulle, le cycle de variation spatiale de la lumière est dit discontinu.

Il doit être considéré que les niveaux bas **I_{B}** et haut **I_{H}** d'intensité lumineuse sont sensiblement constants, c'est-à-dire présentent une variation δ minimale telle que cette variation δ est très petite devant la différence de niveau entre les intensités haute et basse.

Il est à noter que le niveau d'intensité haut **I_{H}** des zones claires **c** est au moins suffisant pour traverser les objets et donner un niveau de signal maximum sans saturation de la caméra. Le niveau d'intensité haut **I_{H}** est supérieur au niveau d'intensité bas **I_{B}.** De préférence, le niveau d'intensité haut **I_{H}** des zones claires **c** est très grand devant le niveau d'intensité bas **I_{B}** des zones sombres **s.** Par exemple, le niveau d intensité **I_{H}** est au moins deux fois supérieur au niveau bas d'intensité lumineuse **I_{B}.** Par exemple, le niveau d'intensité bas **I_{B}** des zones sombres correspond à l'absence de lumière.

Dans l'exemple illustré à la **Fig. 2B****,** le deuxième type d'éclairage fournit une lumière avec une variation spatiale cyclique périodique de valeur constante. En effet, un couple formé d'une zone claire **c** et d'une zone sombre **s** présente une longueur (égale à la somme des longueurs des quatre phases à savoir, **L_{H}, L_{B}, L_{HB}, L_{BH})** qui est égale aux longueurs des autres couples de zones claires et de zones sombres. La lumière varie donc spatialement de manière discontinue selon un cycle périodique de valeur constante.

Bien entendu, le deuxième type d'éclairage peut fournir une lumière avec une variation spatiale cyclique périodique de valeur non constante comme illustrée à la **Fig. 2C****.** Dans ce cas, les longueurs des couples de zones claires c et de zones sombres **s** sont différentes. Ainsi, sur au moins une et dans l'exemple illustré à la **Fig. 2C****,** sur deux parties a de sa longueur, la lumière présente une variation spatiale discontinue selon un cycle périodique dont la valeur est différente du cycle périodique de variation sur la partie b. Dans l'exemple, la longueur des bandes alternées sombres et claires sur la partie a est plus importante que la longueur des bandes alternées sombres et claires réalisées sur la partie b. Cette solution permet d'adapter l'éclairage aux différentes formes que peut présenter un objet à inspecter. Il est à noter que le deuxième type d'éclairage peut fournir une lumière avec une variation spatiale discontinue cyclique non périodique. Dans ce cas, les zones sombres **s** et claires **c** possèdent des longueurs qui varient sans faire apparaître de cycle qui se répète comme illustré par exemple à la **Fig. 2D****.**

Dans l'exemple illustré à la **Fig. 2A****,** les valeurs du niveau haut d'intensité lumineuse **I_{H}** sont sensiblement identiques pour toutes les zones claires **c.** De même, les niveaux bas d'intensité lumineuse **I_{B}** sont sensiblement identiques pour toutes les zones sombres **s.** Bien entendu, il peut être envisagé que le niveau haut d'intensité lumineuse **I_{H}** (et/ou respectivement le niveau bas **I_{B}**) présente des valeurs distinctes pour différents cycles, c'est-à-dire pour au moins certaines des zones claires (et/ou respectivement les zones sombres **s**). Par exemple, il peut être prévu que la source lumineuse possède deux niveaux hauts d'intensité lumineuse pour les différentes zones claires **c** situées respectivement dans les zones **a** et **b** de la source illustré à la **Fig. 2C****.** De même, il peut être prévu que la source lumineuse possède deux niveaux bas d'intensité lumineuse **I_{B}** pour les différentes zones sombres **s** situées respectivement dans les zones **a** et **b** de la source illustrée à la **Fig. 2C****.**

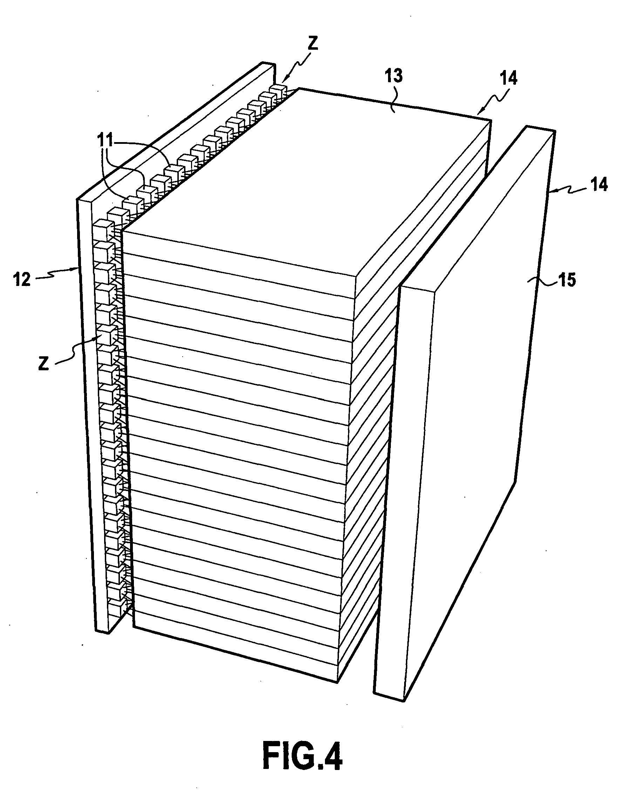

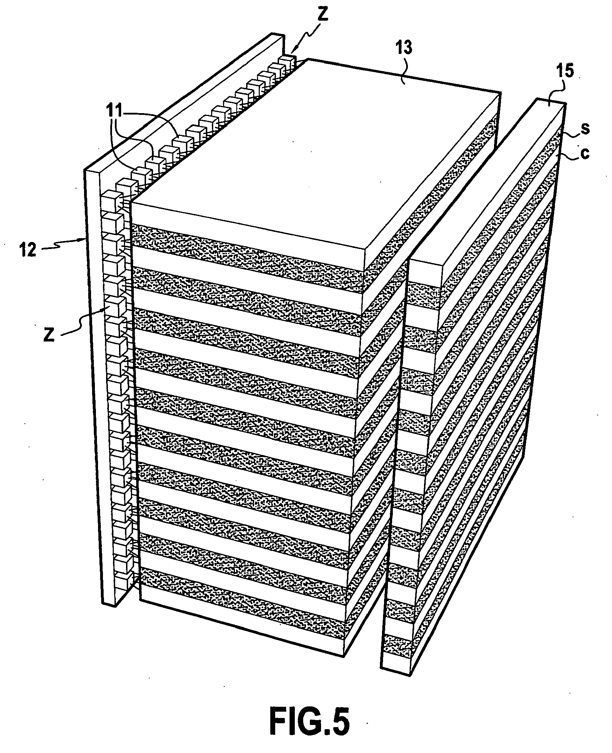

Les **Fig. 4** et **5** illustrent un exemple préféré de réalisation d'une source d'éclairage **3** conforme à l'invention. Selon cet exemple, la source lumineuse **3** est réalisée par une série de sources lumineuses élémentaires **11** réunies en plusieurs zones accolées **Z** indépendamment commandées en intensité et/ou en durée d'éclairement. Dans l'exemple illustré, les sources lumineuses élémentaires **11** sont organisées en rangées horizontales définissant, chacune une zone **Z** de sources élémentaires **11.** Les sources lumineuses élémentaires **11** d'une même zone **Z** sont commandées simultanément soit en éclairage soit en extinction. Les sources lumineuses élémentaires **11** d'une zone **Z** sont commandées de manière indépendante des sources lumineuses élémentaires **11** des autres zones **Z.** Par exemple, les sources lumineuses élémentaires **11** sont réalisées par des diodes électroluminescentes montées sur un circuit imprimé **12.** Devant chaque zone **Z,** est disposé un guide de lumière **13** adapté pour conduire la lumière émise par les sources élémentaires **11** de la zone **Z** jusqu'à une face d'émission **14.** Ces guides de lumière **13** permettent ainsi d'obtenir en sortie, une lumière homogène en intensité. Dans l'exemple de réalisation illustré aux **Fig. 4** et **5****,** chaque guide de lumière **13** est constitué par un parallélépipède réalisé en un matériau transparent tel que du verre ou une matière plastique telle que du polycarbonate ou polyacrylique. Chaque guide de lumière **13** conduit la lumière en son sein en canalisant les faisceaux lumineux par réflexions successives sur leurs parois.

Avantageusement, les guides de lumière **13** sont accolés ou juxtaposés les uns aux autres. Dans l'exemple illustré, les guides de lumière **13** sont superposés les uns aux autres en s'étendant horizontalement. Il est à noter que chaque guide de lumière **13** canalise les faisceaux lumineux empêchant la lumière issue d'une zone éclairée **Z** de passer dans le guide de lumière d'une zone adjacente **Z.** Si lorsqu'une zone éclairée est adjacente à une zone éteinte, il apparaît au niveau de la sortie une séparation nette entre la zone éclairée et la zone éteinte. Avantageusement, il peut être prévu d'interposer sur le chemin de la lumière, des diffuseurs **15** renforçant l'homogénéité de l'éclairage dans chaque guide de lumière **13.**

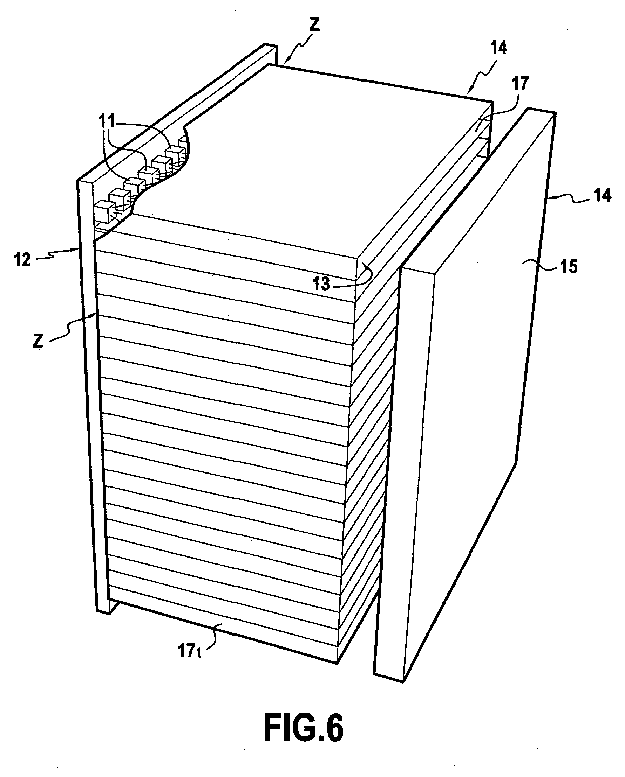

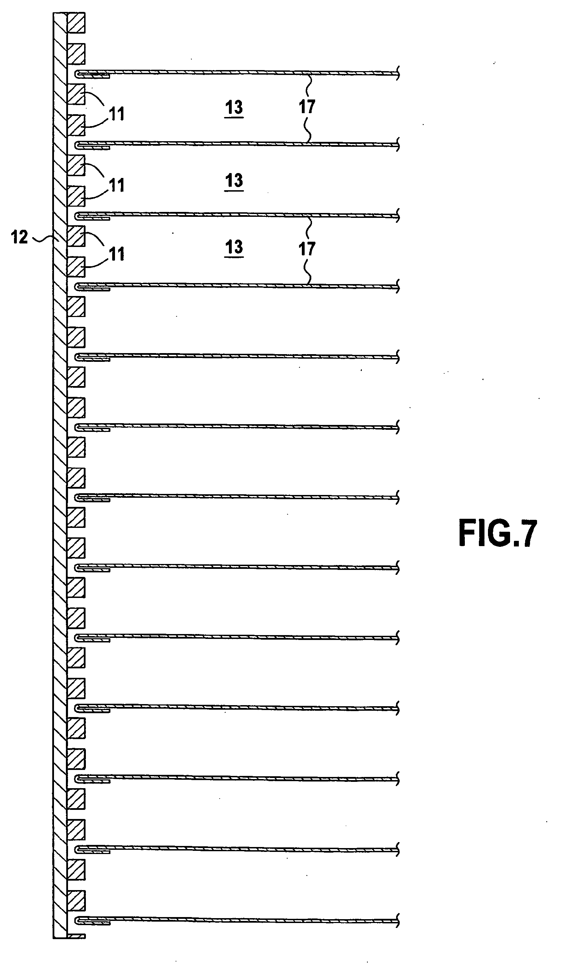

Les **Fig. 6** et **7** illustrent un autre exemple de réalisation des guides de lumière **13.** Selon cet exemple de réalisation, chaque guide de lumière **13** est réalisé par un canal ou une chambre délimité par des parois **17** dont au moins certaines d'entre elles séparent les guides de lumière entre eux. Ainsi, il peut être prévu de former une boîte comportant une série de plaques **17** par exemple métalliques, s'étendant parallèlement les unes aux autres en étant maintenues latéralement par deux plaques de côté **17₁** s'étendant perpendiculairement aux plaques **17.** Par exemple, les côtés opposés des plaques **17** sont engagés dans des lumières aménagées dans les plaques de côté **17₁** assurant le positionnement des plaques **17.** Tel que cela ressort de la **Fig. 7****,** les plaques de côté **17₁** sont destinées à être reliées entre elles par le circuit imprimé **12** qui forme ainsi le panneau de fond de la boîte. Les plaques **17** sont montées pour venir s'étendre jusqu'au circuit imprimé **12** en étant fixées ou non au circuit imprimé **12** permettant de séparer la lumière d'un guide de lumière à l'autre. Chaque guide de lumière **13** est donc délimité par deux plaques parallèles voisines **17** et les parties des plaques de côté **17₁.** Selon cet exemple de réalisation, chaque guide de lumière **13** possède ainsi une section droite transversale rectangulaire. Par exemple, les deux plaques parallèles voisines **17** sont montées de part et d'autre d'au moins une et par exemple deux rangées de diodes électroluminescentes **12** de manière à conduire la lumière jusqu'à la face d'émission **14** située au niveau des bords d'extrémités des plaques, opposés de ceux situés à proximité du circuit imprimé **12.** Bien entendu, il peut être prévu d'interposer sur le chemin de la lumière, des diffuseurs **15** renforçant l'homogénéité de l'éclairage dans chaque guide de lumière **13.**

La commande des sources lumineuses élémentaires **11** par zone permet d'obtenir l'éclairage et/ou l'extinction de ladite zone. Il peut ainsi être prévu de réaliser le premier type d'éclairage en assurant la commande en éclairage des sources lumineuses élémentaires **11** de l'ensemble des zones **Z** conduisant à la production d'un éclairage homogène résultant de la juxtaposition des sorties des guides de lumière (**Fig. 4**). La source lumineuse **3** est apte à fournir le second type d'éclairage par commande alternée en éclairement-extinction par zones **Z** des sources lumineuses élémentaires **13.** Cette commande permet d'obtenir une alternance de zones sombres **s** et de zones claires **c** à savoir des bandes alternées noires et claires comme illustré à la **Fig. 5****.**

La source de lumière **3** conforme à l'invention peut être réalisée de manière différente. Par exemple, il peut être prévu de réaliser une source de lumière uniforme, par exemple au moyen d'un ensemble de sources élémentaires telles que des diodes électroluminescentes disposées derrière un diffuseur. Ces sources élémentaires peuvent être remplacées par des tubes fluorescents haute fréquence ou toute autre type de source de lumière continue ou pilotable. Devant cette source uniforme, il est disposé un élément pilotable comprenant plusieurs zones indépendantes pouvant être rendues transparentes ou opaques selon une commande électrique. Une telle fonction peut être réalisée au moyen d'un écran à cristaux liquides.

De même, la source lumineuse **3** peut être réalisée par un système de projection d'images sur un écran de reprise des images tel qu'un vidéo projecteur à base de cristaux liquides ou de DLP (digital light processing). Le système ainsi projette sur l'écran soit une image homogène claire correspondant au premier type d'éclairage soit une image comportant des zones sombres et des zones claires alternées avec une variation spatiale discontinue correspondant au deuxième type d'éclairage.

Selon un autre exemple de réalisation, la source lumineuse **3** peut être réalisée à partir de sources lumineuses élémentaires réunies en zones accolées indépendamment commandées en intensité et/ou en durée d'éclairement. De préférence, les sources lumineuses élémentaires sont des diodes électroluminescentes organiques (OLED).

Selon une caractéristique avantageuse de réalisation, il peut être prévu de disposer, sur le trajet de la lumière produite par la source lumineuse **3**, un écran commandé électriquement pour occuper soit un état transparent lorsque la source émet le deuxième type d'éclairage soit un état diffusant lorsque la source émet le premier type d'éclairage. Il est à noter qu'un tel écran commandé électriquement, pour occuper deux états, peut être placé sur le trajet de la lumière des diverses variantes de réalisation de la source lumineuse **3** décrites ci-dessus.

Le dispositif d'inspection **1** comporte des moyens **4** permettant de prendre des images des objets éclairés par les deux types d'éclairage. Les moyens **4** comportent également des moyens de traitement des images prises avec les éclairages de premier et de second type en vue de détecter respectivement les défauts à fort contraste et les défauts à faible contraste.

Le dispositif d'inspection **1** conforme à l'invention permet ainsi de combiner dans un seul poste de contrôle, la détection des défauts faible contraste et la détection des défauts fort contraste sans perdre de performance pour chacune de ces détections. A cet effet, il doit être considéré que l'objet de l'invention permet ainsi de piloter la source lumineuse **3** de manière que ladite source puisse produire successivement deux types d'éclairage à savoir un éclairage homogène et un éclairage formé d'une alternance de zones sombres **s** et de zones claires **c** avec une variation spatiale cyclique discontinue. La source d'éclairage unique **3** produit donc, successivement à haute cadence, un éclairage le plus uniforme possible puis un éclairage avec un motif nettement contrasté, par exemple, une alternance de bandes horizontales noires et blanches. La caméra **5** est apte à prendre successivement et rapidement au moins deux images des objets à contrôler qui défilent à haute cadence devant le dispositif d'inspection conforme à l'invention. Ces objets **2** ne se sont pratiquement pas déplacés entre les deux prises de vue et restent ainsi dans le champ de la caméra et de la source lumineuse **3.** L'unité de traitement d'images **6** analyse des images prises avec la source homogène de manière à détecter des variations locales brutales de niveau de gris en vue de détecter des défauts à fort contraste. L'unité de traitement **6** analyse les images prises avec l'éclairage formé d'une alternance de zones sombres **s** et de zones claires **c** avec une variation spatiale discontinue en vue de détecter des défauts à faible contraste. A cet effet, l'unité **6** analyse les images prises en détectant les transitions des niveaux de gris au niveau des transitions des bandes noires et blanches.

Il est à noter que le dispositif d'inspection peut également comporter un filtre polariseur linéaire ou circulaire disposé devant la source d'éclairage **3** et un filtre linéaire ou circulaire devant les moyens **4** de prise d images. De tels filtres permettent d'assurer la détection des défauts du type stress.

L'invention n'est pas limitée aux exemples décrits et représentés car diverses modifications peuvent y être apportées sans sortir de son cadre.

## Revendications

1. Procédé optique d'inspection en ligne d'objets transparents ou translucides (**2**) défilant à haute cadence entre une source lumineuse (**3**) et des moyens (**4**) de prise d'images des objets et d'analyse des images prises, afin de détecter des défauts dans les objets, **caractérisé en ce qu'**il consiste:
- à piloter la source lumineuse (**3**) unique de manière que ladite source produise successivement deux types d'éclairage pour chaque objet défilant devant ladite source, le premier type étant un éclairage homogène tandis que le deuxième type est formé de zones sombres (**s**) et de zones claires (**c**) alternées selon un cycle périodique avec une variation spatiale discontinue, comportant pour chaque cycle :
- une phase (**P_{H}**) de maintien sur une longueur non nulle (**L_{H}**) d'un niveau haut d'intensité lumineuse (**I_{H}**) à une valeur sensiblement constante,
- une phase (**P_{B}**) de maintien sur une longueur non nulle (**L_{B}**) d'un niveau bas d'intensité lumineuse (**I_{B}**) à une valeur sensiblement constante,
- et des phases (**P_{HB}, P_{BH}**) de transition entre les niveaux haut et bas d'intensités lumineuses avec des longueurs respectives (**L_{HB,} L_{BH}**).
- à prendre des images de chaque objet en défilement lorsque chacun d'eux est éclairé successivement par les deux types d'éclairage,
- et à analyser les images prises avec les éclairages de premier et de second type en vue de détecter respectivement les défauts à fort contraste et les défauts à faible contraste.

2. Procédé selon la revendication 1, **caractérisé en ce qu'**il consiste à piloter la source lumineuse (**3**) de manière que le deuxième type d'éclairage est formé de zones sombres et de zones claires alternées avec une variation spatiale discontinue s'établissant selon un cycle périodique de valeur constante ou non.

3. Procédé selon la revendication 1, **caractérisé en ce qu'**il consiste à piloter la source lumineuse (**3**) de manière que les longueurs (**L_{HB}, L_{BH}**) des phases de transition (**P_{HB}, P_{BH}**) tendent vers une durée nulle.

4. Procédé selon la revendication 1, **caractérisé en ce qu'**il consiste à piloter la source lumineuse (**3**) de manière que le niveau haut d'intensité lumineuse (**I_{H}**) soit au moins supérieur au niveau bas d'intensité lumineuse (**I_{B}**), avec le niveau haut d'intensité lumineuse (**I_{H}**) étant au moins suffisant pour traverser les objets (**2**) tandis que le niveau bas d'intensité lumineuse (**I_{B}**) tend vers une valeur nulle.

5. Procédé selon la revendications 3 ou 4, **caractérisé en ce qu'**il consiste à piloter la source lumineuse (**3**) de manière que les niveaux hauts (respectivement les niveaux bas) de l'intensité lumineuse des zones claires (**c**) (respectivement des zones sombres **s**) présentent des valeurs distinctes pour différents cycles.

6. Dispositif d'inspection optique en ligne d'objets transparents ou translucides (**2**) défilant à haute cadence entre une source lumineuse (**3**) et des moyens (**4**) de prise d'images des objets et d'analyse des images prises afin de détecter des défauts dans les objets, **caractérisé en ce qu'**il comprend une source lumineuse :
- des moyens (**9**) pour piloter l'unique source lumineuse (**3**) de manière que ladite source lumineuse produise successivement deux types d'éclairage lors du défilement de chaque objet entre la source lumineuse (**3**) et les moyens de prise et d'analyse d'images (**4**), le premier type étant un éclairage homogène tandis que le deuxième type est un éclairage formé de zones sombres (**S**) et de zones claires (**C**) alternées selon un cycle périodique avec une variation spatiale discontinue, comportant
- et des moyens (**4**) de prise d'images de chaque objet éclairé par les deux types d'éclairage et de traitement des images prises avec les éclairages de premier et de second type en vue de détecter respectivement les défauts à fort contraste et les défauts à faible contraste.

7. Dispositif d'inspection selon la revendication 6 **caractérisé en ce que** la source lumineuse (**3**) est réalisée par une série de sources élémentaires (**11**) réunies en zones (**Z**) accolées indépendamment, commandées en intensité et/ou en durée d'éclairement, un guide de lumière (**13**) étant disposé devant chaque zone de manière à obtenir en sortie de chaque guide, une lumière homogène en intensité.

8. Dispositif d'inspection selon la revendication 7, **caractérisé en ce que** chaque guide de lumière (**13**) est réalisé par un parallélépipède de matière transparente.

9. Dispositif d'inspection selon la revendication 7, **caractérisé en ce que** chaque guide de lumière (**13**) est réalisé par un canal délimité par des parois dont au moins certaines d'entre elles séparent les guides de lumière entre eux.

10. Dispositif d'inspection selon lune des revendications 7 à 9, **caractérisé en ce qu'**au moins un diffuseur (**15**) est interposé sur le trajet de la lumière émise par les sources élémentaires.

11. Dispositif d'inspection selon la revendication 6, **caractérisé en ce que** la source lumineuse (**3**) est réalisée par une source de lumière uniforme devant laquelle est placé un écran à cristaux liquides piloté pour rendre opaque ou transparente des zones déterminées.

12. Dispositif d'inspection selon la revendication 6, **caractérisé en ce que** la source lumineuse (**3**) est réalisée par un système de projection sur un écran de reprise, d'images correspondant soit à une image homogène claire soit à une image comportant des zones sombres et des zones claires alternées avec une variation spatiale discontinue.

13. Dispositif d'inspection selon la revendication 6, **caractérisé en ce que** la source lumineuse (**3**) est réalisée par une série de diodes électroluminescentes organiques réunies en zones (**Z**) accolées, indépendamment commandées en intensité et/ou en durée d'éclairement.

14. Dispositif d'inspection selon l'une des revendications 7 à 13, **caractérisé en ce qu'**un écran commandé électriquement pour occuper soit un état transparent soit un état diffusant, est disposé sur le trajet de la lumière de la source lumineuse.

15. Dispositif d'inspection selon la revendication 6, **caractérisé en ce que** la source de lumière (**3**) est composée de sources élémentaires réunies en zones indépendamment commandées en intensité et/ou en durée d'éclairement, un écran commandé électriquement pour occuper soit un état transparent soit un état diffusant étant disposé sur le trajet de la lumière.

16. Dispositif d'inspection selon la revendication 6, **caractérisé en ce qu'**il comporte un filtre polariseur linéaire ou circulaire devant la source d'éclairage et un filtre linéaire ou circulaire devant les moyens de prise d'images.

## Claims

1. Optical inspection method for the line inspection of transparent or translucent objects (2) travelling at fast rate between a light source (3) and means (4) to take images of the objects and to analyze the images taken, so as to detect defects in the objects, **characterized in that** it consists of:
- controlling the single light source (3) so that said source successively produces two types of illumination for each object travelling in front of said source, the first type being homogeneous illumination whilst the second type is formed of alternate dark areas (s) and light areas (c) with a periodic cycle with discontinuous spatial variability, comprising for each cycle:
- a phase (P_{H}) maintaining, over a nonzero length (L_{H}), a high level of light intensity (I_{H}) at a substantially constant value,
- a phase (P_{B}) maintaining, over a nonzero length (L_{B}), a low level light intensity (I_{B}) at a substantially constant value,
- and transition phases (P_{HB}, P_{BH}) between the high and low levels of light intensity with respective lengths (L_{HB}, L_{BH}),
- taking images of each travelling object when each thereof is successively illuminated by both types of lighting,
- and analyzing the images taken with the first and second types of illumination, with a view to detecting high contrast defects and low contrast defects respectively.

2. Method according to claim 1, **characterized in that** it consists of controlling the light source (3) so that the second type of illumination is formed of alternate dark areas and light areas with discontinuous spatial variability occurring in a periodic cycle, whether or not of constant value.

3. Method according to claim 1, **characterized in that** it consists of controlling the light source (3) so that the lengths (L_{HB}, L_{BH}) of the transition phases (P_{HB}, P_{BH}) tend towards zero duration.

4. Method according to claim 1, **characterized in that** it consists of controlling the light source (3) so that the high level of light intensity (I_{H}) is at least greater than the low level of light intensity (I_{B}) with the high level of light intensity (I_{H}) being at least sufficient to pass through the objects (2), whilst the low level of light intensity (I_{B}) tends towards a zero value.

5. Method according to claims 3 or 4, **characterized in that** it consists of controlling the light source (3) so that the high (and respectively low) levels of light intensity of the light areas (c) (and respectively dark areas (s)) have separate values for different cycles.

6. Device for the optical line inspection of transparent or translucent objects (2) travelling at fast rate between a light source (3) and means (4) to take images of the objects and to analyze the images taken, so as to detect defects in the objects, **characterized in that** it comprises :
- a light source,
- means (9) to control the single light source (3) so that said light source successively produces two types of illumination when each object travels between the light source (3) and the image taking and analysis means (4), the first type being homogenous illumination whilst the second type is lighting formed of alternate dark areas (s) and light areas (c) with a periodic cycle with discontinuous spatial variability, comprising for each cycle:
- a phase (P_{H}) maintaining, over a nonzero length (L_{H}), a high level of light intensity (I_{H}) at a substantially constant value,
- a phase (P_{B}) maintaining, over a nonzero length (L_{B}), a low level light intensity (I_{B}) at a substantially constant value,
- and transition phases (P_{HB}, P_{BH}) between the high and low levels of light intensity with respective lengths (L_{HB}, L_{BH}),
- and means (4) to take images of each object illuminated by both types of illumination and to process the images taken with the first and second type of illumination, with a view to detecting high contrast defects and low contrast defects respectively.

7. Inspection device according to claim 6, **characterized in that** the light source (3) consists of a series of elementary sources (11) grouped into adjacent zones (Z) independently controlled with respect to light intensity and/or illumination time, a light guide (13) being arranged in front of each zone so as to obtain light of homogeneous intensity at the output of each guide.

8. Inspection device according to claim 7, **characterized in that** each light guide (13) is formed of a parallelepiped of transparent material.

9. Inspection device according to claim 7, **characterized in that** each light guide (13) is formed by a channel delimited by walls of which at least some separate the light guides from each other.

10. Inspection device according to any of claims 7 to 9, **characterized in that** at least one diffuser (15) is inserted on the pathway of the light emitted by the elementary sources.

11. Inspection device according to claim 6, **characterized in that** the light source (3) is formed of a uniform light source in front of which a liquid crystal display is placed that is controlled so as to make determined areas opaque or transparent.

12. Inspection device according to claim 6, **characterized in that** the light source (3) consists of a system projecting images onto a capture screen, which correspond either to a homogeneous light-coloured image or to an image comprising alternate dark areas and light areas with discontinuous spatial variability.

13. Inspection device according to claim 6, **characterized in that** the light source (3) consists of a series of organic light-emitting diodes grouped into adjacent zones (Z) independently controlled with respect to light intensity and/or illumination time.

14. Inspection device according to any of claims 7 to 13, **characterized in that** a screen controlled electrically to assume either a transparent state or a diffusing state is arranged on the pathway of the light of the light source.

15. Inspection device according to claim 6, **characterized in that** the light source (3) consists of elementary sources grouped into zones controlled independently with respect to light intensity and/or illumination time, a screen controlled electrically to assume either a transparent state or a diffusing state being arranged on the light path.

16. Inspection device according to claim 6, **characterized in that** it comprises a linear or circular polarizing filter in front of the light source, and a linear or circular filter in front of the image taking means.

## Patentansprüche

1. Optisches Verfahren zur Inline-Inspektion von transparenten oder durchscheinenden Gegenständen (2), die mit hohem Tempo zwischen einer Lichtquelle (3) und Mitteln (4) zur Aufnahme von Bildern der Gegenstände und zur Analyse der aufgenommenen Bilder durchlaufen, um Defekte in den Gegenständen zu erkennen, **dadurch gekennzeichnet, daß** es darin besteht:
- die einzige Lichtquelle (3) derart zu steuern, daß die Quelle nacheinander zwei Beleuchtungsarten für jeden an der Quelle vorbeilaufenden Gegenstand erzeugt, wobei die erste Art eine homogene Beleuchtung ist, während die zweite Art von dunklen Bereichen (s) und von hellen Bereichen (c), die mit einer diskontinuierlichen räumlichen Änderung entsprechend einem periodischen Zyklus abwechseln, gebildet ist, mit -für jeden Zyklus- :
- einer Phase (P_{H}) zum Halten -über eine Länge ungleich Null (L_{H})- eines hohen Leuchtkraftniveaus (I_{H}) auf einem im wesentlichen konstanten Wert,
- einer Phase (P_{B}) zum Halten -über eine Länge ungleich Null (L_{B})- eines niedrigen Leuchtkraftniveaus (I_{B}) auf einem im wesentlichen konstanten Wert, und
- Übergangsphasen (P_{HB}, P_{BH}) zwischen dem hohen und dem niedrigen Leuchtkraftniveau mit jeweiligen Längen (L_{HB}, L_{BH}),
- von jedem vorbeilaufenden Gegenstand Bilder aufzunehmen, wenn ein jeder von ihnen nacheinander durch die beiden Beleuchtungsarten ausgeleuchtet wird, und
- die mit den Beleuchtungen der ersten und der zweiten Art aufgenommenen Bilder zu analysieren, um die Defekte mit starkem Kontrast bzw. die Defekte mit schwachem Kontrast zu erkennen.

2. Verfahren nach Anspruch 1, **dadurch gekennzeichnet, daß** es darin besteht, die Lichtquelle (3) derart zu steuern, daß die zweite Beleuchtungsart von dunklen Bereichen und von hellen Bereichen gebildet ist, die mit einer diskontinuierlichen räumlichen Änderung entsprechend einem periodischen Zyklus mit konstantem Wert oder nicht abwechseln.

3. Verfahren nach Anspruch 1, **dadurch gekennzeichnet, daß** es darin besteht, die Lichtquelle (3) derart zu steuern, daß die Längen (L_{HB}, L_{BH}) der Übergangsphasen (P_{HB}, P_{BH}) in Richtung einer Zeitdauer null tendieren.

4. Verfahren nach Anspruch 1, **dadurch gekennzeichnet, daß** es darin besteht, die Lichtquelle (3) derart zu steuern, daß das hohe Leuchtkraftniveau (I_{H}) wenigstens über dem niedrigen Leuchtkraftniveau (I_{B}) liegt, wobei das hohe Leuchtkraftniveau (I_{H}) wenigstens ausreichend ist, um die Gegenstände zu durchdringen, während das niedrige Leuchtkraftniveau (I_{B}) in Richtung eines Wertes Null tendiert.

5. Verfahren nach Anspruch 3 oder 4, **dadurch gekennzeichnet, daß** es darin besteht, die Lichtquelle (3) derart zu steuern, daß die hohen Niveaus (bzw. die niedrigen Niveaus) der Leuchtkraft der hellen Bereiche (c) (bzw. der dunklen Bereiche s) unterschiedliche Werte für verschiedene Zyklen aufweisen.

6. Vorrichtung zur optischen Inline-Inspektion von transparenten oder durchscheinenden Gegenständen (2), die mit hohem Tempo zwischen einer Lichtquelle (3) und Mitteln (4) zur Aufnahme von Bildern der Gegenstände und zur Analyse der aufgenommenen Bilder durchlaufen, um Defekte in den Gegenständen zu erkennen, **dadurch gekennzeichnet, daß** sie umfaßt:
- eine Lichtquelle,
- Mittel (9) zum Steuern der einzigen Lichtquelle (3) derart, daß die Lichtquelle während des Durchlaufens eines jeden Gegenstandes zwischen der Lichtquelle (3) und den Bildaufnahme- und -analysemitteln (4) nacheinander zwei Beleuchtungsarten erzeugt, wobei die erste Art eine homogene Beleuchtung ist, während die zweite Art eine Beleuchtung ist, die von dunklen Bereichen (s) und von hellen Bereichen (c), welche mit einer diskontinuierlichen räumlichen Änderung entsprechend einem periodischen Zyklus abwechseln, gebildet ist, mit -für jeden Zyklus- :
- einer Phase (P_{H}) zum Halten -über eine Länge ungleich Null (L_{H})- eines hohen Leuchtkraftniveaus (I_{H}) auf einem im wesentlichen konstanten Wert,
- einer Phase (P_{B}) zum Halten -über eine Länge ungleich Null (L_{B})- eines niedrigen Leuchtkraftniveaus (I_{B}) auf einem im wesentlichen konstanten Wert, und
- Übergangsphasen (P_{HB}, P_{BH}) zwischen dem hohen und dem niedrigen Leuchtkraftniveau mit jeweiligen Längen (L_{HB}, L_{BH}),
- sowie Mittel (4) zur Aufnahme von Bildern eines jeden durch die beiden Beleuchtungsarten ausgeleuchteten Gegenstandes und zur Verarbeitung der mit den Beleuchtungen der ersten und der zweiten Art aufgenommenen Bilder, um die Defekte mit starkem Kontrast bzw. die Defekte mit schwachem Kontrast zu erkennen.

7. Inspektionsvorrichtung nach Anspruch 6, **dadurch gekennzeichnet, daß** die Lichtquelle (3) durch eine Reihe von Einzelquellen (11) gebildet ist, die zu nebeneinander angeordneten Bereichen (Z) zusammengefaßt sind, welche hinsichtlich Beleuchtungsstärke und/oder -dauer unabhängig gesteuert werden, wobei ein Lichtleiter (13) vor jedem Bereich angeordnet ist, um am Ausgang eines jeden Leiters ein hinsichtlich Stärke homogenes Licht zu erhalten.

8. Inspektionsvorrichtung nach Anspruch 7, **dadurch gekennzeichnet, daß** jeder Lichtleiter (13) von einem Quader aus transparentem Material gebildet ist.

9. Inspektionsvorrichtung nach Anspruch 7, **dadurch gekennzeichnet, daß** jeder Lichtleiter (13) von einem Kanal gebildet ist, der durch Wände begrenzt ist, von denen wenigstens einige die Lichtleiter untereinander trennen.

10. Inspektionsvorrichtung nach einem der Ansprüche 7 bis 9, **dadurch gekennzeichnet, daß** wenigstens ein Diffusor (15) auf dem Weg des durch die Einzelquellen ausgesandten Lichts angeordnet ist.

11. Inspektionsvorrichtung nach Anspruch 6, **dadurch gekennzeichnet, daß** die Lichtquelle (3) von einer gleichförmigen Lichtquelle gebildet ist, vor der ein Flüssigkristallbildschirm angeordnet ist, welcher gesteuert wird, um bestimmte Bereiche opak oder transparent zu machen.

12. Inspektionsvorrichtung nach Anspruch 6, **dadurch gekennzeichnet, daß** die Lichtquelle (3) von einem System zum Projizieren -auf eine Wiedergabebildwand- von Bildern, die entweder einem homogenen hellen Bild oder einem Bild mit dunklen Bereichen und hellen Bereichen, welche mit einer diskontinuierlichen räumlichen Änderung abwechseln, entsprechen, gebildet ist.

13. Inspektionsvorrichtung nach Anspruch 6, **dadurch gekennzeichnet, daß** die Lichtquelle (3) von einer Reihe von organischen Leuchtdioden gebildet ist, die zu nebeneinander angeordneten Bereichen (Z) zusammengefaßt sind, welche hinsichtlich Beleuchtungsstärke und/oder -dauer unabhängig gesteuert werden.

14. Inspektionsvorrichtung nach einem der Ansprüche 7 bis 13, **dadurch gekennzeichnet, daß** ein Schirm, der elektrisch gesteuert ist, um entweder einen transparenten Zustand oder einen streuenden Zustand einzunehmen, auf dem Weg des Lichts der Lichtquelle angeordnet ist.

15. Inspektionsvorrichtung nach Anspruch 6, **dadurch gekennzeichnet, daß** die Lichtquelle (3) aus Einzelquellen besteht, die zu Bereichen zusammengefaßt sind, welche hinsichtlich Beleuchtungsstärke und/oder -dauer unabhängig gesteuert werden, wobei ein Schirm, der elektrisch gesteuert ist, um entweder einen transparenten Zustand oder einen streuenden Zustand einzunehmen, auf dem Weg des Lichts angeordnet ist.

16. Inspektionsvorrichtung nach Anspruch 6, **dadurch gekennzeichnet, daß** sie ein lineares oder zirkulares Polarisationsfilter vor der Beleuchtungsquelle sowie ein lineares oder zirkulares Filter vor den Bildaufnahmemitteln umfaßt.
